# EUROPEAN PATENT SPECIFICATION

(11) **EP 3 418 321 B1**
(45) Date of publication and mention of the grant of the patent: **15.07.2020**
(21) Application number: 17710793.5
(22) Date of filing: 23.01.2017
(51) Int. Cl.: C08J 3/12, C08J 3/18, C08J 3/20, C08J 3/22, C08L 23/12, C08L 67/04

(54) **PROCESS FOR THE PREPARATION OF A GRANULATED PLASTICISER FORMULATION, CONTAINING A LONG-CHAIN BRANCHED ALCOHOL AND POLYPROPYLENE, FORMULATION THUS OBTAINED AND PROCESS FOR THE PLASTICISATION OF POLYLACTIC ACID USING THE REFERRED FORMULATION**
VERFAHREN ZUR HERSTELLUNG EINER GRANULIERTEN WEICHMACHERFORMULIERUNG MIT EINEM LANGKETTIGEN VERZWEIGTEN ALKOHOL UND POLYPROPYLEN, DAMIT ERHALTENE FORMULIERUNG UND VERFAHREN ZUR WEICHMACHUNG VON POLY(MILCHSÄURE) UNTER VERWENDUNG DIESER FORMULIERUNG
PROCÉDÉ POUR LA PRÉPARATION D'UNE FORMULATION PLASTIFIANTE GRANULÉE CONTENANT UN ALCOOL RAMIFIÉ À CHAÎNE LONGUE ET DU POLYPROPYLÈNE, FORMULATION AINSI OBTENUE ET PROCÉDÉ DE PLASTIFICATIONI DE POLY(ACIDE LACTIQUE) FAISANT APPEL À LADITE FORMULATION

(30) Priority: 25.01.2016 PT 2016109107
(43) Date of publication of application: 26.12.2018
(73) Proprietor: Universidade de Coimbra, 3004-531 Coimbra (PT); Sicor - Sociedade Industrial De Cordoaria, S.A., 3889-852 Cortegaça (PT)
(72) Inventor: JORDÃO COELHO, Jorge Fernando, 3030-509 Coimbra (PT); COIMBRA SERRA, Arménio, 3030-180 Coimbra (PT); DE SÁ ALVES DA SILVA, Augusto, 3885-619 Esmoriz (PT)
(74) Representative: Lourenço Martinho do Rosário, Ana Margarida
(86) International application number: PCT/IB2017/050339
(87) International publication number: WO 2017/130094

(56) References cited:
- US-A1- 2003 216 496
- DATABASE WPI Week 201334 Thomson Scientific, London, GB; AN 2012-H91099 XP002768782, & KR 2012 0073613 A (COMTECH CHEM CO LTD) 5 July 2012 (2012-07-05)

## Description

### TECHNICAL FIELD OF THE INVENTION

The invention is related to the plasticisation process of polylactic acid that allows the use of this biodegradable material in uses that are currently performed by non-biodegradable polymers such as polypropylene and polyethylene. The concerned plasticisation was developed so that the plasticised FLA is used in the manufacture of filaments and films.

### BACKGROUND OF THE INVENTION

PLA (polylactic acid) is one of the most promising polymers with possibility of substitution of the olefinic origin polymers such as polyethylene (PE) or polypropylene (PP) The great advantage of PLA is that it is a biodegradable polymer obtained by lactic acid polymerization via the fermentative pathway what translates into a material of renewable origin. However PLA presents mechanical properties that are still very distant from the materials it is intended to replace such as PP or PE. PLA presents a greater structural rigidity due to its high glass transition temperature and is very poorly flexible what does not permit its use in many manufactured objects. In order to be able to acquire flexibility properties it needs to be processed with a plasticising agent so that it becomes a more flexible material with greater possibilities of use. Plasticiser agents are of various types and there are several solutions described for their incorporation in the PLA so that obtained fibres or films of PLA have similar mechanical characteristics to PP or PE fibres.

Patent US8461262 describes the use of polyethylene glycol as a plasticiser and in addition a compatibilizing agent consisting of a modified polyolefin containing reactive groups such as anhydrides, organic acids or amides. This mixture would be used for the manufacture of a fibre type material.

Patent US8188185 proposes that the FLA plasticisation is made by addition of thermoplastic starch in that the percentage of PLA is not above 30%. In addition the mixture also includes the addition of an aliphatic or aromatic type polyester in a percentage up to 60%. The material is used for the production of films.

Patent US8101688 describes the production of PLA fibre containing a bisamide in a proportion up to 5% as an improvement agent of the PLA characteristics. The formulation also includes surface smoothing agents that can be silicone oils, fatty acid esters and other esters. The final material is in the form of a fibre.

Patent US7256223 describes the use of PLA plasticisers that are vegetable oils in the epoxy and/or esterified form. The use of these plasticisers also requires the presence of compatibilizers consisting of polymers containing at least one polar group that can interact with the PLA. Other components are also added to the formulation as antistatic agents, inorganic compounds, reticulant agents, UV absorbing compounds, etc.

Patent US6399197 describes the preparation of a monofilament with good mechanical properties through the incorporation of polymers along with PLA. The presence of these polymers increases the flexibility of PLA and the traction elongation. The nature of the added polymer is a polyester in a proportion that can reach 39%. The aliphatic polyether can have a diverse structure and inclusively they can have two different structures.

Patent US5883199 describes the use of mixtures of PLA and aliphatic polyesters wherein the carboxylic acid contains carbon chains that can go from C₂ to C₂₀. The final products obtained from this material are films and bags.

Patent application KR20120073613 relates to a polylactic acid composition used for e.g. industrial component, comprising a specified amount of polylactic acid and a modified plasticizer masterbatch. The modified plasticizer masterbatch contains acrylic powder (100 parts by weight) and plasticizer (50-300 parts by weight). The plasticizer is chosen from castor oil, palm oil, oxidized olive oil and natural oil.

Patent application US2003216496 relates to a process for preparing polymeric material comprising the steps of: a) preparing a mixture comprising a polylactic acid-based polymeric material, a plasticizer and a compatibilizer; b) heating the mixture; c) forming the heated mixture into a desired shape; and d) solidifying the formed, heated mixture by cooling. The plasticizer is selected from the group consisting of an adipate, a phthalate, a citrate, an epoxidized vegetable oil, an esterified and epoxidized vegetable oil, and combinations thereof. The compatibilizer comprises a polyolefin modified with at least one polar functional group.

### SUMMARY OF THE INVENTION

This invention describes the development of a plasticiser formulation for use in the extrusion of PLA (polylactic acid) and that allows that the obtained PLA has mechanical characteristics that allow the formation of filaments and films for the production of ropes and nets. This plasticiser formulation is a granulated material ready to be used in industrial extruders and is composed of a mixture of polypropylene and long-chain branched alcohols such as Isofol.

### DETAILED DESCRIPTION OF THE INVENTION

In the present invention a formulation was developed that when applied to PLA in percentages of 0.5 to 25%, and preferably 13%, produces a filament or film with very similar properties to film or filament made from poliolefinic polymers such as PP or PE. This formulation has unique melt-flow characteristics that allow its use with PLA without disturbing the process of filament or film formation. The novelty of the invention is the use of branched alcohols as plasticisers of PLA, being those alcohols commercially available under the generic name of ISOFOL, having as examples, ISOFOL 28 and ISOFOL 32. The object of this invention is the development of a formulation that enables Isofol to be integrated in PLA. For this purpose a granulated formulation has been developed that can be used directly on extruders and that consists of a mixture of Isofol and polypropylene. This product, when incorporated into the extrusion with PLA, produces a material with good mechanical characteristics to produce PLA-based filaments and films. This PP/PLA mixture is used in variable proportions up to 25% but the development made led to the conclusion that the optimal percentage is around 13% consisting the rest of the material of PLA and other agents normally used on filaments and films processing.

The present invention consists in the preparation of a granulated material used on the process of PLA plasticisation. The granulate contains in its composition long chain branched alcohols of the ISOFOL type (Sasol products) and polypropylene. The advantage of the granulate use consists on the alcohol introduction as a PLA plasticiser without causing difficulties on the extrusion process as what happens with the use of alcohol directly on the extrusion of PLA.

Polypropylene has been chosen for the mixture to facilitate its processing in the extrusion environment. The mixture synthesis is a process that involves initial fusion of both components PP and alcohol (by heating the premixture) so that they can be mixed and then this mix be extruded and cut into small granules.

This product is presented as a solid granulate with adequate characteristics for use in the extrusion of PLA, for the most diverse applications, as a plasticiser. The amount of granulate to be used in mixtures is about 13%, corresponding to about 1.3% of alcohol in the final material. The preferred alcohols are from the ISOFOL family (Sasol products). The production of this plasticiser material PP/alcohol can be extended to other types of materials with similar structure to alcohols, such as vegetable oils or esters of low melting point.

### Objects of the invention

A first object of the invention is a process for the preparation of a granulated plasticiser formulation comprising the following steps:
(a) Preparation of a mixture of 5 to 70% by weight of a long-chain branched alcohol (with more than 20 carbon atoms) and 95 to 30% by weight of polypropylene of formula: 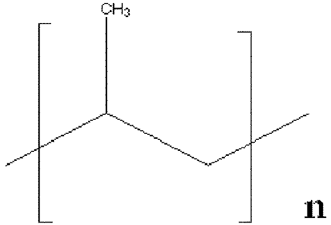
(b) Heating the mixture referred to in (a) up to the melting point of polypropylene (about 165°C) until it is perfectly fluid;
(c) Extrusion of the molten mixture obtained in (b); and
(d) Cut of the extruded mixture in order to obtain uniform sized granules.

The long-chain branched alcohols more used are commercially available under the generic name of ISOFOL.

Of these alcohols, the preferred are 2-tetradecyloctadecanol (ISOFOL 32), of formula: 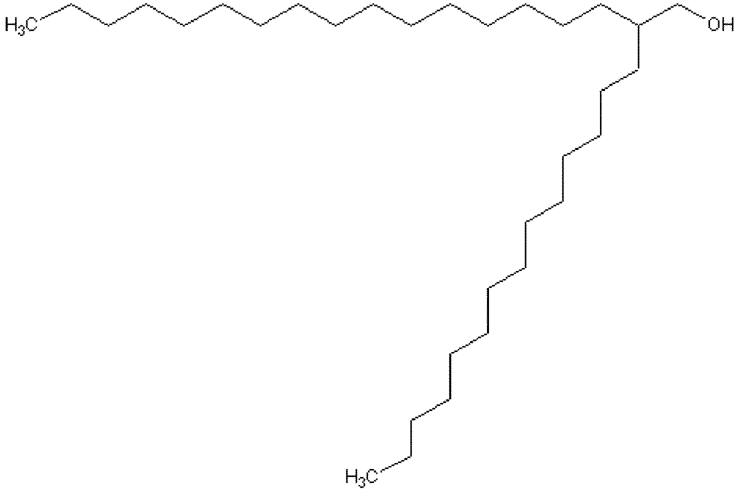 and 2-dodecyl-hexadecanol (ISOFOL 28), of formula:

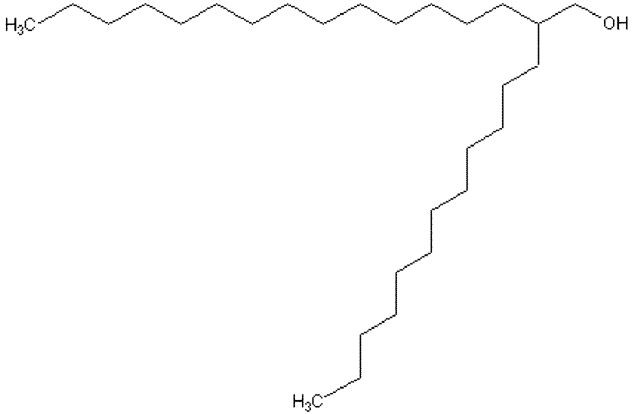

The preferred percentages of these alcohols are between 10 and 60% by weight, and of the referred polypropylene between 40 and 90% by weight.

A second object of the invention is the granulated plasticiser formulation obtained by the process mentioned above.

A third object of the invention is the process of plasticisation of polylactic acid (PLA) that comprises the following steps:
(a) Preparation of a mixture of 75 to 99.5% by weight of PLA and 25 to 0.5% by weight of granulated plasticiser formulation of long-chain branched alcohol/polypropylene previously referred to;
(b) Feeding the mentioned mixture obtained in (a) in an industrial extruder for the production of monofilaments or film, being the extrusion temperatures between 175 and 215° C.

Normally, the percentage of PLA is between 80 and 95% by weight, and the proportion of granulated plasticiser formulation lies between 20 and 5% by weight.

Percentages of 87% or more by weight of PLA and 13% or more by weight of plasticising formulation are especially preferred.

A fourth objet of the invention are the plasticised PLA monofilaments or film obtained by the process mentioned above.

### Examples

### Example 1: Synthesis of the ISOFOL 32 (50%) and polypropylene (50%) Regranulate

A mixture of ISOFOL 32 (50%) and polypropylene (50%) has been prepared. This mixture is preheated until it reaches the melting point (of polypropylene which is the highest), at approximately 165°C, when it is perfectly fluid. On a second phase the mixture is extruded and subsequently cut in the form of granules of uniform size. The components of the mixture are shown in the figure below.

### Example 2: Synthesis of ISOFOL 32 (10%) and polypropylene (90%) Regranulate

A mixture of ISOFOL 32 (10%) and polypropylene (90%) was prepared. This mixture is preheated until it reaches the melting point (of polypropylene which is the highest), at approximately 165°C, when it is perfectly fluid. The proportions used in this mixture were optimized taking into consideration the characteristics pretended to obtain the granules for use in extrusion of plastics.

### Example 3: Incorporation of the granulated mixture of ISOFOL/polypropylene (10/90) in the extrusion of PLA monofilaments.

A mixture of PLA (87%) and ISOFOL/Polypropylene granulate (13%) was previously prepared and was then fed into an industrial extruder for the production of monofilaments or film. Extrusion temperatures are between 175 and 215°C and the final characteristics of the filaments obtained after extrusion are described in the following table.

**Table 1 - Most important physical characteristics of monofilaments of PLA/granulate, extruded in industrial environment.**

| **PLA filaments tensile strength** | | | | | | |
|---|---|---|---|---|---|---|
| **Sample** | **Max. Strength (daN)** | **Max. Strength (Kbf)** | **Elongation Max. (%)** | **Elongation Max. (mm)** | **Tenacity (cN/tex)** | **Tenacity (df/den)** |
| 1 | 6,5 | 6,6 | 19,9 | 95,3 | 49 | 5,5 |
| 2 | 6,9 | 7,0 | 22,5 | 108,0 | 52 | 5,9 |
| 3 | 7,0 | 7,1 | 21,8 | 104,5 | 52 | 5, 9 |
| 4 | 6,5 | 6, 6 | 20,0 | 95,8 | 49 | 5, 5 |
| 5 | 6,3 | 6, 4 | 18,8 | 90,5 | 47 | 5,3 |

| **Statistics** | | | | | | |
|---|---|---|---|---|---|---|
| Minimum | 6,3 | 6,4 | 18,8 | 90,5 | 47 | 5,3 |
| Average | 6,6 | 6,8 | 20,6 | 98,8 | 50 | 5,6 |
| Maximum | 7,0 | 7,1 | 22,5 | 108 | 52 | 5,9 |
| Std deviation | 0,3 | 0,3 | 1,5 | 7,2 | 2,2 | 0,3 |

Lisbon, February 22^{nd}, 2017

## Claims

1. Process for the preparation of a granulated plasticiser formulation, **characterized by** comprising the following steps:
(a) Preparation of a mixture of 5 to 70% by weight of a long-chain branched alcohol, with more than 20 carbon atoms, and 95 to 30% by weight of polypropylene of formula: 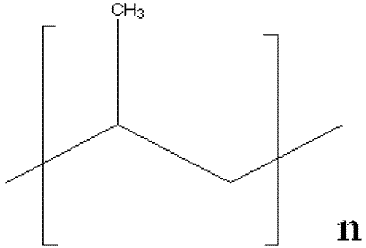
(b) Heating the mixture referred to in (a) up to the melting point of polypropylene until it is perfectly fluid;
(c) Extrusion of the molten mixture obtained in (b); and
(d) Cut of the extruded mixture in order to obtain uniform sized granules.

2. Process according to claim 1, **characterized by** the long-chain branched alcohol being the 2-tetradeciloctadecanol, of formula:

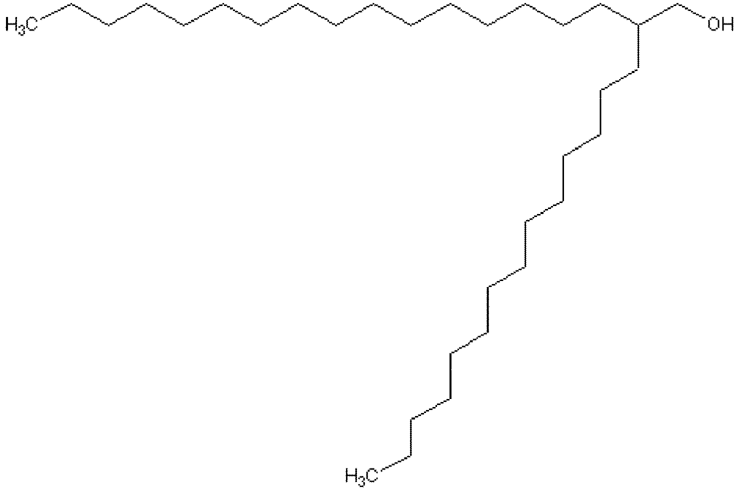

3. Process according to claim 1, **characterized by** the long-chain branched alcohol being the 2-dodecyl-hexadecanol, of formula:

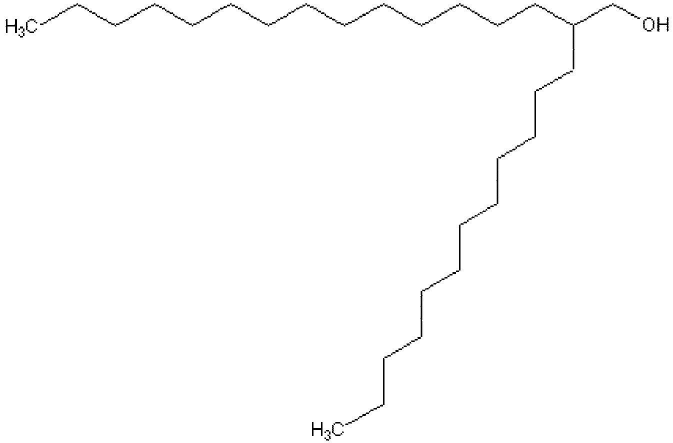

4. Process according to any of the claims 1 to 3, **characterized by** the percentage of the referred alcohol being between 1o and 60% by weight, and the percentage of the referred polypropylene being between 40 and 90% by weight.

5. Granulated plasticiser formulation, **characterized by** being obtained by the process of any of the claims 1 to 4.

6. Process for plasticisation of polylactic acid, **characterized by** comprising the following steps:
(a) Preparation of a mixture of 75 to 99.5% by weight of polylactic acid and 25 to 0.5% by weight of granulated plasticiser formulation of claim 5;
(b) Feeding the mentioned mixture obtained in (a) in an industrial extruder for the production of monofilament or film, wherein the extrusion temperatures are between 175 and 215°C.

7. Process according to claim 1, **characterised by** the percentage of polylactic acid being between 80 and 95% by weight, and the percentage of granulated plasticiser formulation being between 20 and 5% by weight.

8. Process according to claim 7, **characterized by** the percentage of polylactic acid being 87% by weight, and the percentage of plasticising formulation being 13% by weight.

9. Monofilaments or film of plasticised polylactic acid, **characterized by** being obtained by the process of any of the claims 6 to 8.

## Patentansprüche

1. Verfahren zur Herstellung einer granulierten Weichmacherformulierung, **dadurch gekennzeichnet, dass** es die folgenden Schritte umfasst:
(a) Zubereitung einer Mischung aus 5 bis 70 Gew.-% eines langkettigen verzweigten Alkohols mit mehr als 20 Kohlenstoffatomen und 95 bis 30 Gew.-% Polypropylen der Formel: 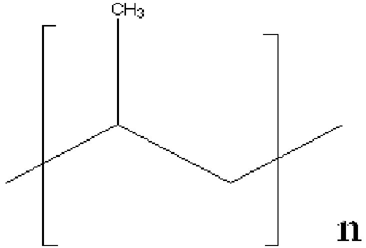
(b) Erhitzen der unter (a) genannten Mischung bis zum Schmelzpunkt von Polypropylen und bis sie vollkommen flüssig ist;
(c) Extrusion der unter (b) gewonnenen Schmelzmischung; und
(d) Schnitt der extrudierten Mischung, sodass ein Granulat einheitlicher Größe entsteht.

2. Verfahren nach Anspruch 1, **dadurch gekennzeichnet, dass** der langkettig verzweigte Alkohol das 2-Tetradeciloctadecanol der Formel darstellt:

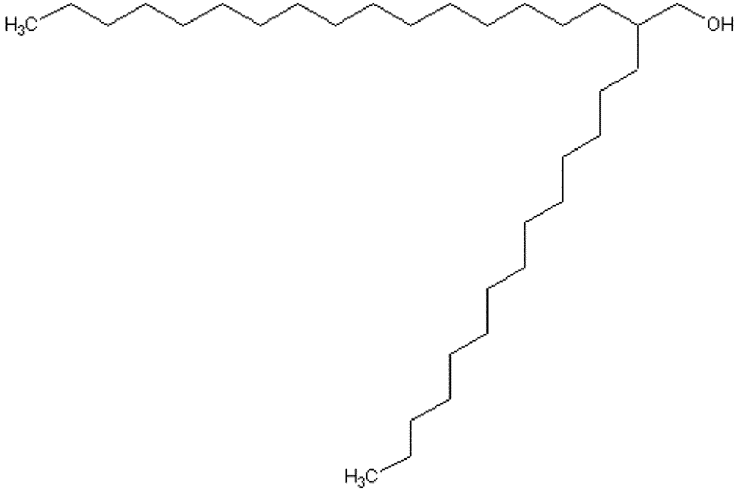

3. Verfahren nach Anspruch 1, **dadurch gekennzeichnet, dass** der langkettig verzweigte Alkohol das 2-dodecyl-hexadecanol der Formel darstellt:

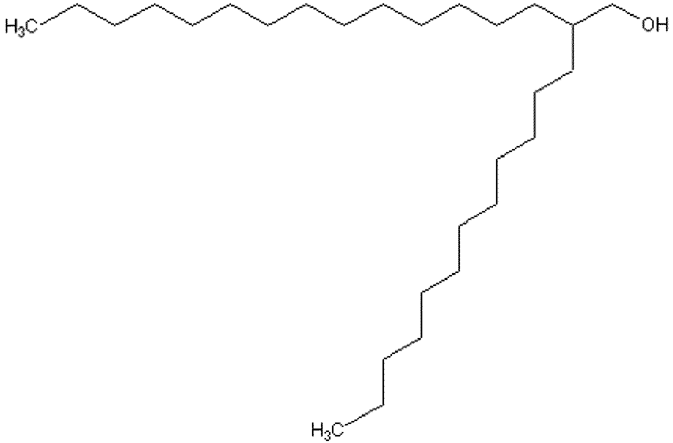

4. Verfahren nach einem der Ansprüche 1 bis 3, **dadurch gekennzeichnet, dass** der Prozentsatz des besagten Alkohols zwischen 10 und 60 Gew.-% und der Prozentsatz des besagten Polypropylens zwischen 40 und 90 Gew.-% liegt.

5. Granulierte Weichmacherformulierung, **dadurch gekennzeichnet, dass** sie durch das Verfahren nach einem der Ansprüche 1 bis 4 gewonnen wird.

6. Verfahren zur Weichmachung von Polylactid, **dadurch gekennzeichnet, dass** es die folgenden Schritte umfasst:
(a) Herstellung einer Mischung aus 75 bis 99,5 Gew.-% Polylactid und 25 bis 0,5 Gew.-% einer granulierten Weichmacherformulierung nach Anspruch 5;
(b) Zuführen der in (a) erhaltenen genannten Mischung in einen Industrieextruder zur Herstellung von Monofilamenten oder Filmen, wobei die Extrusionstemperaturen zwischen 175 und 215°C liegen.

7. Verfahren nach Anspruch 6, **dadurch gekennzeichnet, dass** der Prozentsatz des Polylactids zwischen 80 und 95 Gew.-% und der Prozentsatz der granulierten Weichmacherformulierung zwischen 20 und 5 Gew.-% liegt.

8. Verfahren nach Anspruch 7, **dadurch gekennzeichnet, dass** der Prozentsatz des Polylactids 87 Gew.-% und der Prozentsatz der Weichmacherformulierung 13 Gew.-% beträgt.

9. Monofilamente oder Filme aus weichgemachtem Polylactid, **dadurch gekennzeichnet, dass** sie durch das Verfahren nach einem der Ansprüche 6 bis 8 gewonnen werden.

## Revendications

1. Procédé pour la préparation d'une formulation de plastifiant granulé, **caractérisé en ce qu'**il comprend les étapes suivantes:
(a) Préparation d'un mélange de 5 à 70% en poids d'un alcool ramifié à longue chaîne, ayant plus de 20 atomes de carbone, et de 95 à 30% en poids de polypropylène de formule: 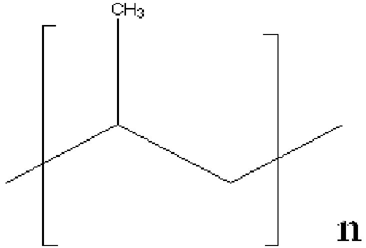
(b) Chauffage du mélange visé au point (a) jusqu'au point de fusion du polypropylène jusqu'à ce qu'il soit parfaitement fluide;
(c) Extrusion du mélange fondu obtenu au point (b); et
(d) Coupe du mélange extrudé afin d'obtenir des granulés de taille uniforme.

2. Procédé selon la revendication 1, **caractérisé en ce que** l'alcool ramifié à longue chaîne est le 2-Tétradécyl-octadécanol, de formule:

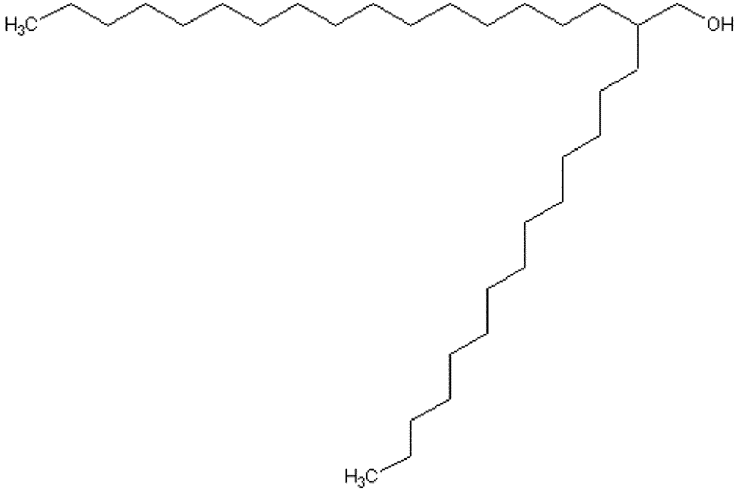

3. Procédé selon la revendication 1, **caractérisé en ce que** l'alcool ramifié à longue chaîne est le 2-dodécyl-hexadécanol, de formule:

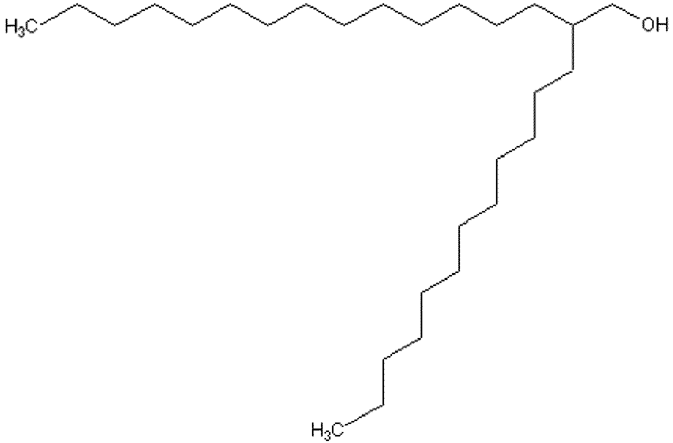

4. Procédé selon l'une des revendications 1 à 3, **caractérisé en ce que** le pourcentage de l'alcool mentionné est compris entre 10 et 60% en poids, et le pourcentage du polypropylène mentionné est compris entre 40% et 90% en poids.

5. Formulation de plastifiant granulé, **caractérisée par** le fait d'être obtenue par le procédé de l'une des revendications 1 à 4.

6. Procédé de plastification de l'acide polylactique, **caractérisé en ce qu'**il comprend les étapes suivantes:
(a) Préparation d'un mélange de 75% à 99,5% en poids d'acide polylactique et de 25% à 0,5% en poids de formulation de plastifiant granulé de la revendication 5;
(b) Introduction du mélange mentionné obtenu au point (a) dans une extrudeuse industrielle pour la production de monofilaments ou de film, dans laquelle les températures d'extrusion sont comprises entre 175 et 215°C.

7. Procédé selon la revendication 6, **caractérisé en ce que** le pourcentage d'acide polylactique est compris entre 80% et 95% en poids, et le pourcentage de formulation de plastifiant granulé est compris entre 20% et 5% en poids.

8. Procédé selon la revendication 7, **caractérisé en ce que** le pourcentage d'acide polylactique est de 87% en poids, et le pourcentage de formulation plastifiante est de 13% en poids.

9. Monofilaments ou film d'acide polylactique plastifié, **caractérisé en ce qu'**il est obtenu par le procédé de l'une des revendications 6 à 8.
